# EUROPEAN PATENT SPECIFICATION

(11) **EP 3 323 327 B1**
(45) Date of publication and mention of the grant of the patent: **12.02.2020**
(21) Application number: 16207381.1
(22) Date of filing: 29.12.2016
(51) Int. Cl.: A47J 37/12, A47J 41/02

(54) **OIL BARREL AND ELECTRIC FRYER HAVING THE SAME**
ÖLFASS UND ELEKTRISCHE FRITTEUSE DAMIT
BARIL D'HUILE ET FRITEUSE ÉLECTRIQUE LE COMPORTANT

(30) Priority: 22.11.2016 CN 201611050665
(43) Date of publication of application: 23.05.2018
(73) Proprietor: X.J. Electronics (Shenzhen) Co., Ltd, Shenzhen Guangdong (CN)
(72) Inventor: PAN, Yun, Shenzhen, Guangdong (CN)
(74) Representative: Carpmaels & Ransford LLP

(56) References cited:
- WO-A1-03/030697
- DE-A1- 3 032 899
- DE-A1- 10 004 762
- KR-B1- 101 664 344
- US-A1- 2006 000 733

## Description

### Technology Field

The present invention belongs to the field of food processing, and particularly to an oil barrel and an electric fryer having the same.

### Background

In existing fryers (or electric fryers), oil barrels are all single-layer structures, and the materials of the oil barrels include aluminum (including tensile aluminum and cast aluminum), stainless steel, and cold-rolled plates processed by oil injection. DE10004762 A1 relates to cooking utensils with lids, covers and closures which are isolated by a double wall and a vacuum. There are plastic shells, stainless steel shells, or shells in other materials outside the oil barrels, so that a thermal insulation protective layer is formed between an oil barrel and user while the product modeling purpose is achieved. However, when an electric fryer product is normally used, the oil temperature therein may be about 200 °C, and the temperature of the outside surface of the oil barrel will also be about 200 °C, that is, the outside surface of the oil barrel has a problem of a too high temperature. At this time, if user touches the electric fryer inadvertently, he/she may be burned seriously and a security incident is then caused.

### Summary

A purpose of the present invention is to overcome the aforesaid problems in the prior art and provide an oil barrel, which aims at solving the problem that the temperature of the outside surface of the oil barrel is too high.

The present invention is implemented as follows:
An oil barrel which is suitable for an electric fryer, the oil barrel comprises an outer shell shaped as a barrel, an inner shell shaped as a barrel disposed in a barrel cavity of the outer shell and having a distance from the outer shell, and a shell connector configured to connect the outer shell with the inner shell and connected between a lip edge of the outer shell and a lip edge of the inner shell; the outer shell, the inner shell and the shell connector cooperatively define a thermal insulation chamber; the outer shell of the oil barrel is provided with a vacuuming interface structure, which is configured to cooperate with a vacuuming device to evacuate air from the thermal insulation chamber and make the thermal insulation chamber become a vacuum chamber.

Optionally, an outside surface of the outer shell facing away from the thermal insulation chamber is coated with an appearance pattern layer.

Optionally, the oil barrel comprises a pair of handles, and the two handles are respectively disposed on the two opposite outside surfaces of the outer shell.

Optionally, the vacuuming interface structure is disposed on a bottom of the outer shell.

Optionally, the oil barrel comprises a protective masking lid configured for covering the vacuuming interface structure.

Optionally, the outer shell, the inner shell, and the shell connector are provided integrally.

Optionally, the oil barrel comprises at least three support legs connected to a bottom of the outer shell, and bottoms of the support legs are all located in a same plane.

The present invention further provides an electric fryer, the electric fryer comprises an oil barrel, a heating component and an upper cover component covering the oil barrel, the oil barrel is an oil barrel described above, the heating component includes a heating tube disposed in the barrel of a cavity of the inner shell and a control box electrically connected with the heating tube and controlling heating of the heating tube.

Optionally, the control box is fixed on the outside surface of an outer shell.

Optionally, the electric fryer comprises a frying net component, the frying net component includes a frying net configured for containing food to be fried and disposed in the barrel cavity of the inner shell, a hand shank disposed outside the oil barrel, and a frying net connector configured for connecting the frying net with the hand shank; the heating tube is arranged between the frying net and a bottom of the barrel cavity of the inner shell.

Based on the structure of the present invention, after the outer shell, the inner shell, the shell connector and the vacuuming interface structure are assembled together, a vacuuming device is used to evacuate air from the thermal insulation chamber and thereby make the thermal insulation chamber become a vacuum chamber; wherein, vacuum means an ideal state in which no substance exists, and the vacuum chamber herein means a chamber in which very little material exists. On the basis of this, and according to thermal principles, it can be known that heat conduction needs to be performed via a substance having a certain thermal conductivity. The thermal insulation chamber becomes a vacuum chamber after being evacuated by the vacuuming device, that is, by the evacuation process for the thermal insulation chamber, the heat conduction from the inner shell to the outer shell can be greatly prevented, such that an excellent heat insulation effect is provided so as to avoid a too high temperature of the outside surface of the oil barrel. The outer shell could maintain a lower temperature even during a continuous use, the safety performance of oil barrel is greatly improved, so that users can avoid being burned when touching the oil barrel accidentally, the personal safety of consumers is greatly protected, and safe and enjoyable use experience is brought to consumers. While the thermal insulation chamber provides the heat insulation function, the thermal insulation chamber can also provide a heat preservation function for hot oil in the oil barrel, so that the automatic constant-temperature time interval of the fryer having the oil barrel is lengthened, the purposes of saving electricity and conserving energy are achieved, and the fryer is more power-saving and more environment-friendly than other fryers of the same capacity and the same power.

In addition, the outside surface of the outer shell of the oil barrel has a characteristic of a low temperature. Therefore, when the oil barrel is specifically used in the fryer, the outside surface of the outer shell can be used as a decorative shell, and other outer shells does not need to be added on the outside of the oil barrel, the material cost, the mould cost, and the corresponding assembly work of these decorative shells are saved, so that the total cost of the fryer is reduced.

### Brief description of the drawings

In order to illustrate the technical solutions of the embodiments of the present invention more clearly, the drawings used in the embodiments are briefly described below. It will be readily apparent that the drawings described below are only some embodiments of the present invention. For one of ordinary skill in the art, other drawings may be obtained according to these drawings on the premise of paying no creative effort.
Figure 1 is a perspective structural schematic diagram of an oil barrel provided by a first embodiment of the present invention;
Figure 2 is a structural schematic diagram in another view angle of Figure 1;
Figure 3 is a cross-sectional view of a raised oil barrel of the first embodiment one of the present invention;
Figure 4 is an enlarged structural schematic diagram of the part A in Figure 3;
Figure 5 is a cross-sectional view of an oil barrel of another embodiment of the present invention;
Figure 6 is a cross-sectional view of an electric fryer provided by a second embodiment of the present invention.

**Description of Reference Numbers:**

| Number | Name | Number | Name |
|---|---|---|---|
| 100 | Oil barrel | 101 | Thermal insulation chamber |
| 110 | Inner shell | 120 | Outer shell |
| 130 | Shell connector | 140 | Vacuuming interface structure |
| 150 | Handle | 160 | Protective masking lid |
| 170 | Support leg | | |
| 200 | Heating component | | |
| 210 | Heating tube | 220 | Control box |
| 300 | Upper cover component | | |
| 400 | Frying net component | | |
| 410 | Frying net | 420 | Hand shank |
| 430 | Frying net connector | | |

### Detailed Embodiments

In order to make the objectives, technical solutions and advantages of the present disclosure be clearer, the present disclosure will be further described in detail hereinafter with reference to the accompanying drawings and embodiments. It should be understood that embodiments described here are only intended to interpret the present invention but not to limit the invention.

It should be noted that when an element is referred to as being "fixed" or "disposed" to another element, it could be directly located on the other element or indirectly located on the another element. When an element is referred to as being "connected" to another element, it may be directly connected to the other element or indirectly connected to another element.

It should also be noted that the position terms in the embodiments of the present invention, such as left, right, top, bottom, and so on, are only relative concepts or take the normal using state of a product as a reference, and should not be considered as any limitation.

An embodiment of the present invention provide an oil barrel which is suitable for an electric fryer, the oil barrel is used to contain oil and heat the oil for cooking food.

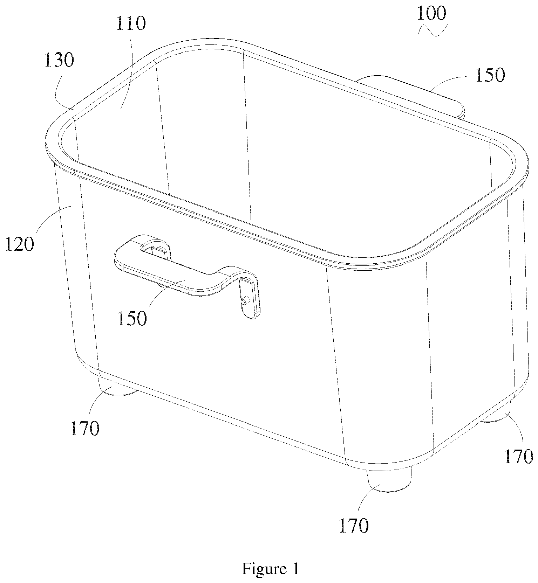

As shown in figures 1 to 4, the oil barrel comprises an outer shell shaped as a barrel 120 shaped as a barrel, an inner shell 110 shaped as a barrel, disposed in the outer shell 120, and having a distance from the outer shell 120, and a shell connector 130 configured to connect the outer shell 120 with the inner shell 110 and connected between a lip edge of the outer shell 120 and a lip edge of the inner shell 110; the outer shell 120, the inner shell 110 and the shell connector 130 cooperatively define a thermal insulation chamber 101, wherein, the shell connector 130 further provides a supporting function for the inner shell 110 to prevent the inner shell 110 from falling to a bottom of a barrel cavity of the outer shell 120 under the action of the force of gravity. Particularly, in the present embodiment, the outer shell 120, the inner shell 110, and the shell connector 130 are provided integrally, in this way, it is advantageous to improve the connection strength among the outer shell 120, the inner shell 110 and the shell connector 130.

In this embodiment of the present invention, the outer shell 120 of the oil barrel 100 is provided with a vacuuming interface structure 140, which is configured to cooperate with a vacuuming device to evacuate air from the thermal insulation chamber 101 and thereby make the thermal insulation chamber 101 become a vacuum chamber. In this way, after the outer shell 120, the inner shell 110, the shell connector 130, and the vacuuming interface structure 140 are assembled together, the air in the thermal insulation chamber 101 can be evacuated by a vacuuming device, thereby making the thermal insulation chamber 101 become a vacuum chamber.

Based on the oil barrel of the present invention, after the outer shell 120, the inner shell 110, the shell connector 130, and the vacuuming interface structure 140 are assembled together, the air in the thermal insulation chamber 101 can be evacuated by a vacuuming device, and thereby make the thermal insulation chamber 101 become a vacuum chamber; wherein, vacuum means an ideal state in which no substance exists, and the vacuum chamber herein means a chamber in which very little material exists. On the basis of this and according to the thermal principles, it can be known that heat conduction needs to be performed via a substance having a certain thermal conductivity. The thermal insulation chamber 101 becomes a vacuum chamber after being evacuated by the vacuuming device,, that is, by the evacuation process for the thermal insulation chamber, the heat conduction from the inner shell to the outer shell can be greatly prevented, such that an excellent heat insulation effect is provided so as to avoid a too high temperature of the outside surface of the oil barrel, the outer shell 120 could maintain a lower temperature even during a continuous use, the safety performance of oil barrels 100 is greatly improved, so that users can avoid being burned when touching the oil barrel 100 accidentally, the personal safety of consumers is greatly protected, and safe and enjoyable use experience is brought to consumers. While the thermal insulation chamber provides the heat insulation function, the thermal insulation chamber 101 can also provide a heat preservation function for hot oil in the oil barrel, so that the automatic constant-temperature time interval of the fryer having the oil barrel 100 is lengthened, the purposes of saving electricity and conserving energy are achieved, and the fryer is more power-saving and more environment-friendly than other fryers of the same capacity and the same power.

In addition, the outside surface of the outer shell 120 of the oil barrel 100 has a characteristic of a low temperature. Therefore, when the oil barrel is specifically used in the fryer, the outside surface of the outer shell 120 can be used as a decorative shell, and other outer shells does not need to be added on the outside of the oil barrel 100, the material cost, the mould cost, and the corresponding assembly work of these decorative shells are saved,, so that the total cost of the fryer is reduced.

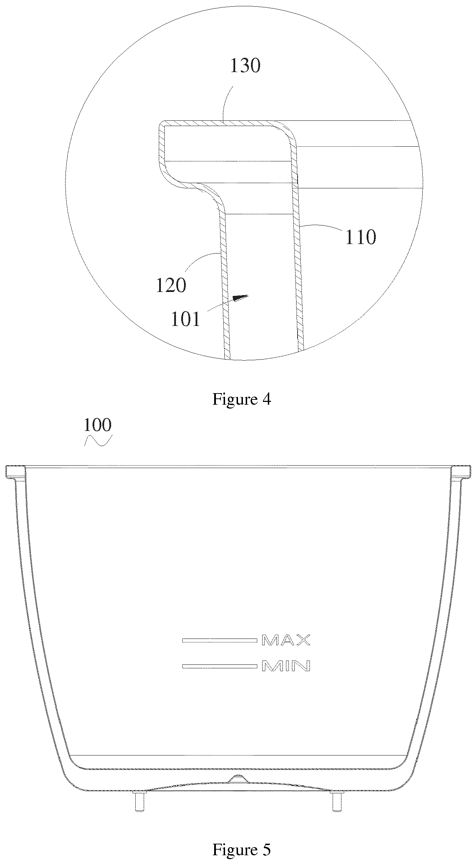

In the embodiment described above, the entire shape of the oil barrel 100 is formed as an approximate cylinder; of course, in other embodiments, the oil barrel 100 could also be formed as other shapes, as shown in figure 5, the entire shape of the oil barrel 100 is formed as a substantially rectangular column.

Further, an outside surface of the outer shell 120 facing away from the thermal insulation cavity 101 is coated with an appearance pattern layer (not labeled in the figures)thermal insulation, the appearance pattern layer may include using methods or matters needing attention of the fryer for indication or explanation.

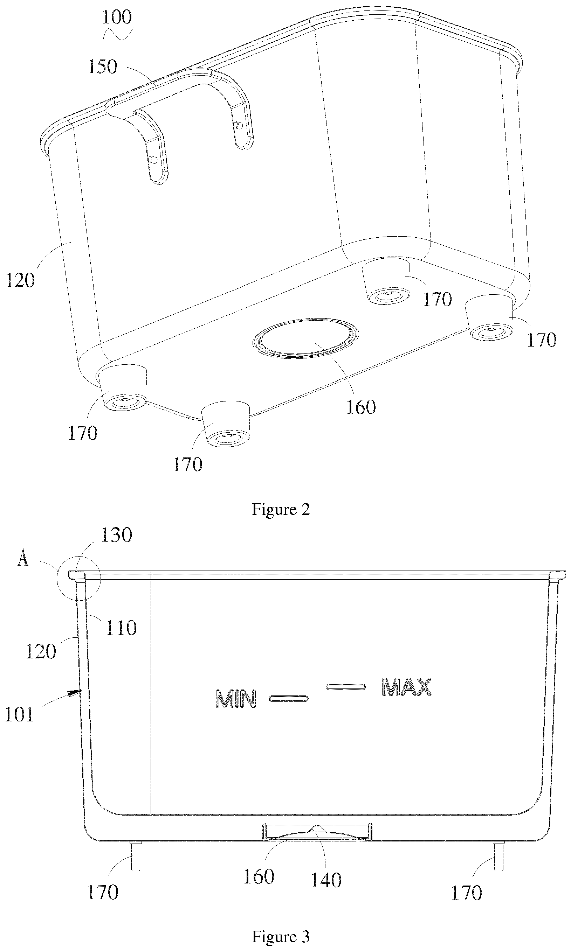

Further, as shown in Figs. 1 and 2, the oil barrel 100 includes a pair of handles 150, and the two handles 150 are provided on two opposite outsides of the outer shell 120 respectively. In this way, a user can grab and raise the oil barrel 100 by the handles 150, such that it is easy to carry and move the oil barrel 100. Further, the handles 150 are farther from the inner shell 110 than the outer housing 120, and thus the temperature of the handles 150 is lower than the temperature of the outer shell 120, so that the temperature of the position grabbed by the user is further decreased, and the user's use experience is improved.

In the present embodiment, as shown in figure 2 and figure 3, the vacuum interface structure 140 is provided at the bottom of the outer shell 120. Based on the structures described above, since the outside surface of the outer shell 120 serves as an appearance surface of the electric fryer having the oil barrel 100, arranging the vacuum interface structure 140 at the bottom of the outer shell 120 is advantageous to prevent the vacuuming structure from deteriorating the appearance and improve the beauty of the appearance.

Further, as shown in figures 2 and 3, the oil barrel 100 includes a protective masking lid 160 for covering the vacuuming interface structure 140. In this way, the vacuum interface structure 140 is covered by the protective masking lid 160, such that dust, oil, and the like are prevented from directly falling into the vacuum interface structure 140.

Further, as shown in figures 1, 2 and 3, wherein, the shell of any support leg 170 is not shown in figure 3; the oil barrel 100 includes at least three support legs 170 connected to the bottom of the outer shell 120, and bottoms of the support legs 170 are all located in a same plane. In this way, by the arrangement of support legs 170, the outer shell 120 can be prevented from directly contacting an upholder, such as a table, so that the temperature of the outer shell 120 is prevented from affecting the upholder. Specifically, in the present embodiment, four support legs 170 are provided.

### Embodiment Two

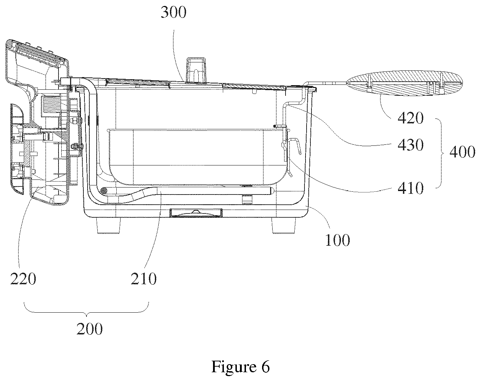

As shown in figure 6, the present invention further provides an electric fryer, which comprises the oil barrel 100 described above, a heating component 200, and a upper cover component 300 covering on the oil barrel 100; the heating component 200 includes a heating tube 210 disposed in the barrel cavity of the inner shell 110 (as shown in figures 1 to 4), and a control box 220 electrically connected with the heating tube 210 and controlling heating of the heating tube 210. The specific structure of the oil barrel 100 is in accordance with the embodiment described above. Since the electric fryer adopts all technical solutions of the embodiment described above, it also has all the advantages brought by the technical solutions of the aforesaid embodiment and does not need to be repeated here.

Further, since the outer shell 120 (as shown in figures 1 to 4) has a low temperature, the control box 220 can be directly fixed to the outside surface of the outer shell 120; based on this, directly mounting and fixing the control box 220 to the outside surface of the outer shell 120 could reduce the auxiliary connection structures, and it is beneficial to reduce components and reduce the cost.

Further, the electric fryer comprises a frying net component 400, the frying net component 400 includes a frying net 410 configured for containing food to be fried and disposed in the barrel cavity of the inner shell 110, a hand shank 420 disposed outside the oil barrel 100, and a frying net connector 430 configured for connecting the frying net 410 with the hand shank 420, the heating tube 210 is arranged between the frying net 410 and a bottom of the barrel cavity of the inner shell 110.

The above contents are only specific embodiments of the prevent invention, and are not intended to limit the prevent invention.

## Claims

1. An oil barrel which is suitable for an electric fryer, wherein, the oil barrel (100) comprises an outer shell (120) shaped as a barrel, an inner shell (110) shaped as a barrel disposed in a barrel cavity of the outer shell (120) and having a distance from the outer shell (120), and a shell connector (130) configured to connect the outer shell (120) with the inner shell (110) and connected between a lip edge of the outer shell (120) and a lip edge of the inner shell (110); the outer shell (120), the inner shell (110) and the shell connector (130) cooperatively define a thermal insulation chamber (101),
**characterised in that** the outer shell (120) of the oil barrel (100) is provided with a vacuuming interface structure (140), which is configured to cooperate with a vacuuming device to evacuate air from the thermal insulation chamber (101) and make the thermal insulation chamber (101) become a vacuum chamber.

2. The oil barrel (100) according to claim 1, wherein, an outside surface of the outer shell (120) facing away from the thermal insulation chamber (101) is coated with an appearance pattern layer.

3. The oil barrel (100) according to claim 1, wherein, the oil barrel (100) comprises a pair of handles (150), and the two handles (150) are respectively disposed on the two opposite outside surfaces of the outer shell (120).

4. The oil barrel (100) according to claim 1, wherein, the vacuuming interface structure (140) is disposed on a bottom of the outer shell (120).

5. The oil barrel (100) according to claim 4, wherein, the oil barrel (100) comprises a protective masking lid (160) configured for covering the vacuuming interface structure (140).

6. The oil barrel (100) according to any one of claims 1 to 5, wherein, the outer shell (120), the inner shell (110), and the shell connector (130) are provided integrally.

7. The oil barrel (100) according to any one of claims 1 to 5, wherein, the oil barrel (100) comprises at least three support legs (170) connected to a bottom of the outer shell (120), and bottoms of the support leg (170) are all located in a same plane.

8. An electric fryer, wherein, the electric fryer comprises an oil barrel (100), a heating component (200) and an upper cover component (300) covering the oil barrel (100), the oil barrel (100) is an oil barrel (100) according to any one of claims 1 to 7, the heating component (200) includes a heating tube (210) disposed in a barrel cavity of the inner shell (110) and a control box (220) electrically connected with the heating tube (210) and controlling heating of the heating tube (210).

9. The electric fryer according to claim 8, wherein, the control box (220) is fixed on an outside surface of the outer shell (120).

10. The electric fryer according to claim 8 or claim 9, wherein, the electric fryer comprises a frying net component (400), the frying net component (400) includes a frying net (410) configured for containing food to be fried and disposed in the barrel cavity of the inner shell (110), a hand shank (420) disposed outside the oil barrel (100), and a frying net connector (430) configured for connecting the frying net (410) with the hand shank (420); the heating tube (210) is arranged between the frying net (410) and a bottom of the barrel cavity of the inner shell (110).

## Patentansprüche

1. Ölbehälter, der für eine elektrische Fritteuse geeignet ist, wobei der Ölbehälter (100) einen Außenmantel (120) in Form eines Fasses, einen Innenmantel (110) in Form eines in einem fassförmigen Hohlraum des Außenmantels (120) mit einem Abstand zum Außenmantel (120) angeordneten Fasses und eine Mantelverbindung (130), die dazu ausgelegt ist, den Außenmantel (120) mit dem Innenmantel (110) zu verbinden und zwischen einer Lippenkante des Außenmantels (120) und einer Lippenkante des Innenmantels (110) verbunden ist, umfasst; wobei der Außenmantel (120), der Innenmantel (110) und die Mantelverbindung (130) zusammen eine Wärmeisolierungskammer (101) definieren,
**dadurch gekennzeichnet, dass** der Außenmantel (120) des Ölbehälters (100) mit einer Saugzwischenstruktur (140) versehen ist, die dazu ausgelegt ist, mit einer Saugvorrichtung zusammenzuwirken, um Luft aus der Wärmeisolierungskammer (101) abzusaugen und die Wärmeisolierungskammer (101) in eine Vakuumkammer umzuwandeln.

2. Ölbehälter (100) nach Anspruch 1, wobei eine Außenfläche des Außenmantels (120), die von der Wärmeisolierungskammer (101) abgewandt ist, mit einer dekorativen Musterschicht beschichtet ist.

3. Ölbehälter (100) nach Anspruch 1, wobei der Ölbehälter (100) ein Paar Griffe (150) umfasst und die zwei Griffe (150) jeweils an den zwei entgegengesetzten Außenflächen des Außenmantels (120) angeordnet sind.

4. Ölbehälter (100) nach Anspruch 1, wobei die Saugzwischenstruktur (140) am Boden des Außenmantels (120) angeordnet ist.

5. Ölbehälter (100) nach Anspruch 4, wobei der Ölbehälter (100) einen Schutzdeckel (160) umfasst, der dazu ausgelegt ist, die Saugzwischenstruktur (140) abzudecken.

6. Ölbehälter (100) nach einem der Ansprüche 1 bis 5, wobei der Außenmantel (120), der Innenmantel (110) und die Mantelverbindung (130) einstückig vorgesehen sind.

7. Ölbehälter (100) nach einem der Ansprüche 1 bis 5, wobei der Ölbehälter (100) mindestens drei Stützbeine (170) umfasst, die mit dem Boden des Außenmantels (120) verbunden sind, wobei sich die Unterseiten der Stützbeine (170) alle in derselben Ebene befinden.

8. Elektrische Fritteuse, wobei die elektrische Fritteuse einen Ölbehälter (100), eine Heizkomponente (200) und eine obere Abdeckungskomponente (300), die den Ölbehälter (100) abdeckt, umfasst, wobei der Ölbehälter (100) ein Ölbehälter (100) nach einem der Ansprüche 1 bis 7 ist, wobei die Heizkomponente (200) ein Heizrohr (210), das in einem fassförmigen Hohlraum des Innenmantels (110) angeordnet ist, und einen Steuerkasten (220), der mit dem Heizrohr (210) elektrisch verbunden ist und die Beheizung des Heizrohrs (210) steuert, enthält.

9. Elektrische Fritteuse nach Anspruch 8, wobei der Steuerkasten (220) an einer Außenfläche des Außenmantels (120) befestigt ist.

10. Elektrische Fritteuse nach Anspruch 8 oder Anspruch 9, wobei die elektrische Fritteuse eine Frittierkorbkomponente (400), wobei die Frittierkorbkomponente (400) einen Frittierkorb (410) enthält, der dazu ausgelegt ist, zu frittierende Lebensmittel zu enthalten, und im fassförmigen Hohlraum des Innenmantels (110) angeordnet ist, einen Handgriff (420), der Außerhalb des Ölbehälters (100) angeordnet ist, und eine Frittierkorbverbindung (430), die dazu ausgelegt ist, den Frittierkorb (410) mit dem Handgriff (420) zu verbinden, umfasst; wobei das Heizrohr (210) zwischen dem Frittierkorb (410) und dem Boden des fassförmigen Hohlraums des Innenmantels (110) angeordnet ist.

## Revendications

1. Bac à huile qui est approprié pour une friteuse électrique, le bac à huile (100) comprenant une enveloppe externe (120) en forme de bac, une enveloppe interne (110) en forme de bac disposée dans une cavité de bac de l'enveloppe externe (120) et ayant une distance par rapport à l'enveloppe externe (120), et un raccord d'enveloppe (130) configuré pour raccorder l'enveloppe externe (120) à l'enveloppe interne (110) et raccordé entre un bord de lèvre de l'enveloppe externe (120) et un bord de lèvre de l'enveloppe interne (110) ; l'enveloppe externe (120), l'enveloppe interne (110) et le raccord d'enveloppe (130) définissant de façon coopérative une chambre d'isolation thermique (101),
**caractérisé en ce que** l'enveloppe externe (120) du bac à huile (100) est pourvue d'une structure d'interface de mise sous vide (140), qui est configurée pour coopérer avec un dispositif de mise sous vide pour évacuer de l'air de la chambre d'isolation thermique (101) et amener la chambre d'isolation thermique (101) à devenir une chambre à vide.

2. Bac à huile (100) selon la revendication 1, dans lequel une surface extérieure de l'enveloppe externe (120) placée dos à la chambre d'isolation thermique (101) est revêtue d'une couche de motif d'apparence.

3. Bac à huile (100) selon la revendication 1, dans lequel le bac à huile (100) comprend une paire de poignées (150), et les deux poignées (150) sont respectivement disposées sur les deux surfaces extérieures opposées de l'enveloppe externe (120).

4. Bac à huile (100) selon la revendication 1, dans lequel la structure d'interface de mise sous vide (140) est disposée sur un dessous de l'enveloppe externe (120) .

5. Bac à huile (100) selon la revendication 4, dans lequel le bac à huile (100) comprend un couvercle de masquage protecteur (160) configuré pour couvrir la structure d'interface de mise sous vide (140).

6. Bac à huile (100) selon l'une quelconque des revendications 1 à 5, dans lequel l'enveloppe externe (120), l'enveloppe interne (110) et le raccord d'enveloppe (130) sont fournis d'un seul tenant.

7. Bac à huile (100) selon l'une quelconque des revendications 1 à 5, le bac à huile (100) comprenant au moins trois pattes de support (170) raccordées à un dessous de l'enveloppe externe (120), et les dessous de la patte de support (170) étant tous situés dans un même plan.

8. Friteuse électrique, la friteuse électrique comprenant un bac à huile (100), un composant de chauffage (200) et un composant de couverture supérieur (300) couvrant le bac à huile (100), le bac à huile (100) étant un bac à huile (100) selon l'une quelconque des revendications 1 à 7, le composant de chauffage (200) incluant un tube de chauffage (210) disposé dans une cavité de bac de l'enveloppe interne (110) et une boîte de commande (220) raccordée électriquement au tube de chauffage (210) et commandant le chauffage du tube de chauffage (210).

9. Friteuse électrique selon la revendication 8, dans laquelle la boîte de commande (220) est fixée sur une surface extérieure de l'enveloppe externe (120).

10. Friteuse électrique selon la revendication 8 ou la revendication 9, la friteuse électrique comprenant un composant de panier de friture (400), le composant de panier de friture (400) incluant un panier de friture (410) configuré pour contenir de la nourriture à frire et disposé dans la cavité de bac de l'enveloppe interne (110), une poche à main (420) disposée à l'extérieur du bac à huile (100), et un raccord de panier de friture (430) configuré pour raccorder le panier de friture (410) à la poche à main (420) ; le tube de chauffage (210) est agencé entre le panier de friture (410) et un dessous de la cavité de bac de l'enveloppe interne (110).
